# EUROPEAN PATENT APPLICATION

(11) **EP 3 029 641 A1**
(43) Date of publication of application: **08.06.2016**
(21) Application number: 15198760.9
(22) Date of filing: 09.12.2015
(51) Int. Cl.: G07F 11/16, G07F 11/62, G07F 11/64, G07F 11/72

(54) **VENDING MACHINE AND ASSOCIATED METHODS**

(30) Priority: 10.10.2014 GB 201417998
(71) Applicant: ShopATM B.V., Geneva (CH)
(72) Inventor: Stinson, Philip, Heathrow UB11 1BD (GB)
(74) Representative: Potter Clarkson LLP

(57) **Abstract**

A vending machine comprising: a delivery aperture configured to enable a user to remove a vendible product from the vending machine; a delivery unit, movable between a non-user-accessible loading position, distal to the delivery aperture, and a user-accessible delivery position proximal to the delivery aperture; a robotic arm; and a pick mechanism coupled to the robotic arm, the pick mechanism configured to retrieve the vendible product in the vending machine and to provide the vendible product to the delivery unit while the delivery unit is located in the non-user-accessible loading position; wherein, the delivery unit is configured to move the received vendible product from the non-user-accessible loading position to the user-accessible delivery position.

## Description

The present disclosure relates to vending machines and in particular, although not necessarily, to robotic vending machines and to mechanisms for improving the efficiency of such vending machines.

According to a first aspect of the invention there is provided a vending machine comprising: a delivery aperture configured to enable a user to remove a vendible product from the vending machine; a delivery unit, movable between a non-user-accessible loading position, distal to the delivery aperture, and a user-accessible delivery position proximal to the delivery aperture; a robotic arm; and a pick mechanism coupled to the robotic arm, the pick mechanism configured to retrieve the vendible product in the vending machine and to provide the vendible product to the delivery unit while the delivery unit is located in the non-user-accessible loading position; wherein, the delivery unit may be configured to move the received vendible product from the non-user-accessible loading position to the user-accessible delivery position.

A vending machine with a separate pick mechanism and moving delivery unit may advantageously operate more quickly and/or more efficiently by separating the movements required to retrieve vendible products from the movements required to present vendible products to a user. Where the two sets of movements are separated, the pick mechanism may be more efficiently utilised to perform vendible product retrieval operations, without expending the time required to move the retrieved vendible products to a user accessible delivery position.

The delivery unit may comprise a moveable tray or floor or caddy. The delivery unit may be moveable in a preferably horizontal plane aligned with the delivery aperture.

There may be provided a vending machine, wherein the delivery unit may be moveable between a plurality of non-user-accessible loading positions such that the delivery unit may be configured to receive one or more vendible products in each of the plurality of non-user-accessible loading positions and to move the received plurality of vendible products to the user-accessible delivery position. Provision of a plurality of different non-user-accessible loading positions may enable the delivery unit to be efficiently loaded with a plurality of vendible products for presentation to a user.

There may be provided a vending machine, further comprising the pick mechanism configured to provide a plurality of vendible products to the delivery unit when positioned in at least one of the non-user-accessible loading positions. The pick mechanism may be configured to position the plurality of vendible products in one or more of a horizontally spaced configuration and a vertically stacked configuration within the delivery unit. Stacking the vendible products in a horizontally and/or vertically ordered array may enable efficient use of space within the delivery unit, especially if the vendible products are rectilinear in shape.

The delivery unit may have a vendible product receiving part and a separate bag receiving part. There may be provided a vending machine, wherein the delivery unit may comprise a bag receiving portion and the pick mechanism may be configured to position a bag within the bag receiving portion, such that when the delivery unit is disposed in the user-accessible delivery position a bag positioned within the bag receiving portion may be presented to a user. Presentation of a bag to a user of a vending machine may enable the user to remove their purchases from the vending machine more quickly and easily such that the vending machine may be enabled to serve subsequent users more quickly, thereby increasing the total possible number of users served per unit time.

There may be provided a vending machine wherein the delivery unit may comprise a plurality of vendible product receiving portions, each vendible product receiving portion having a particular vertical level, the picking mechanism may be further configured to provide a vendible product to an appropriate vendible product receiving portion. The vending machine may be configured to determined which of the product receiving portions to place a product based on the size, weight, or product location in the machine from which it was picked. Thus, weight sensors may be provided. By providing a vendible product to a portion of the delivery unit with an appropriate vertical height, a user may more readily be able to see and/or remove the vendible product from within the vending machine.

There may be provided a vending machine wherein the delivery unit may be configured to move between the non-user-accessible loading position and the user-accessible delivery position by a translational motion. Such a translational motion may efficiently convey the delivery unit from a non-user-accessible loading position located towards the back of the vending machine to a user-accessible delivery position located towards the front of the vending machine.

There may be provided a vending machine wherein the delivery unit may be configured to move between the non-user-accessible loading positon and the user-accessible delivery positon by a rotational motion. A rotating carousel may efficiently convey the delivery unit from a non-user-accessible loading position located towards the back of the vending machine to a user-accessible delivery position located towards the front of the vending machine.

There may be provided a vending machine wherein the delivery unit may be configured to move to the user-accessible-delivery position only after having received the plurality of vendible products. By waiting until all of the vendible products for a particular user or order or part order have been placed in the delivery unit before moving the delivery unit into the user-accessible-delivery position, the vending machine may reduce the amount of movement and therefore the time and power required to convey the vendible products from their initial positions within the vending machine to the user-accessible-delivery position.

According to a further aspect of the invention there is provided a vending machine comprising: a delivery aperture configured to enable a user to remove a vendible product from the vending machine; a delivery unit for presenting vendible product to a user for removal through the delivery aperture, a pick mechanism configured to retrieve a plurality of vendible products in the vending machine and to provide the plurality of vendible products to the delivery unit; wherein the delivery unit comprises a bag receiving portion configured to receive a bag and a separate product receiving portion configured to receive one or more vendible products.

By providing separate portions of the delivery unit configured for a bag and for other vendible products, the vending machine may advantageously present the bag and other vendible products to the user in a particularly convenient and/or efficient manner.

There may be provided a vending machine wherein the bag receiving portion may comprise a guide portion configured to receive and retain the bag in a particular orientation. By retaining the bag in a particular orientation, the user may be particularly easily able to take hold of the bag and load other products into the bag.

There may be provided a vending machine wherein the bag receiving portion may comprise a bag delivery slot configured to receive a bag and to present the bag to a user in an upright orientation.

There may be provided a vending machine wherein the bag delivery slot is located in front of the product receiving portion with respect to the delivery aperture.

There may be provided a vending machine wherein the pick mechanism may be configured to provide a bag, having handles, to the bag delivery slot such that the handles project outwards from the bag delivery slot while at least a portion of the remainder of the bag is retained within the bag delivery slot.

There may be provided a vending machine wherein the delivery unit may be configured to be moveable between a non-user-accessible loading position, distal to the delivery aperture, and a user-accessible delivery position, proximal to the delivery aperture. The pick mechanism may be configured to provide the plurality of vendible products to the delivery unit while the delivery unit is located in a non-user-accessible loading position, before the delivery unit is moved to the user-accessible delivery position.

There may be provided a vending machine further comprising a delivery door movable between a closed position and an open position, the closed position configured to prevent user access to the delivery unit through the delivery aperture, the open position configured to enable user access to the delivery unit through the delivery aperture.

There may be provided a vending machine further comprising a motor configured to move the delivery door and sensor system configured to sense force experienced by the delivery door, wherein the motor and the sensor system may be configured to form a closed feedback loop such that the delivery door may be configured to halt movement if the sensed force exceeds a predetermined threshold.

According to a further aspect of the invention there is provided a vending machine comprising: a plurality of vendible product locations for storing a plurality of vendible products, the plurality of vendible product locations each having a corresponding x-y coordinate; a robotic arm; a pick mechanism coupled to the robotic arm, the robotic arm configured to move the pick mechanism from an initial x-y coordinate to an x-y coordinate corresponding to a target vendible product, the pick mechanism configured to retrieve the target vendible product in the vending machine, the pick mechanism comprising a picker arm extending and moveable in a z direction, the picker arm having a product picker for retrieving the target vendible product; and a distance sensor, coupled to the robotic arm, configured to measure a distance between the product picker and a vendible product in the vending machine.

Using a distance sensor to measure the distance between a reference point, such as the product picker, and a vendible product may advantageously enable the vending machine to move at an appropriate speed to improve the efficiency of retrieval of vendible products and may enable the vending machine to detect any vendible products that have moved out of their expected positions such that the vending machine may undertake appropriate corrective action to deal with misplaced vendible products.

There may be provided a vending machine further configured to provide for a velocity of the product picker in the z direction based on a distance measured by the distance sensor between the product picker and the target vendible product. Measuring the distance between the product picker and the target vendible product, may enable the product picker to be driven towards the target vendible at a high initial speed to reduce the time required to complete a pick operation, while ensuring that sufficient space exists between the product picker and the target vendible product to enable sufficient deceleration of the product picker such that contact between the product picker and the target vendible product does not occur at a damagingly high speed.

There may be provided a vending machine further configured to measure at least one distance between the product picker and at least one vendible product during a pick operation comprising retrieval of the target vendible product, wherein the at least one vendible product is located remote from the target vendible product. Measuring the distance between the product picker and a vendible product during movement of the product picker towards the location of a target vendible product may enable efficient use of the vending machine's resources, as separate movements of the product picker to measure the distance to the at least one vendible product, for stocktaking purposes, may thereby be avoided or at least reduced.

There may be provided a vending machine further configured to move the pick mechanism from an initial x-y coordinate to the x-y coordinate of at least one vendible product location and to measure a distance between the pick mechanism and a vendible product located at the at least one vendible product location. Measuring the distance between the product picker and a vendible product may advantageously enable the vending machine to check the stock level of a particular vendible product, thereby reducing the need for a human operator to undertake the same task. Thus, this operation may be performed outside of a pick operation for retrieving vendible product. The vending machine may be configured to periodically record the distance(s) measured by the distance sensor. The data may be used for stock taking purposes or product position checking, which can improve reliability (such as when a product has fallen over in its product location). The vending machine may have a pick operation mode in which products are retrieved and a vendible product location survey mode in which the distance sensor is configured to measure distances to products for stock taking or product position checking. An alarm may be raised for products discovered to be out-of-position, such as being fallen over. Alternatively, the vending machine may retrieve the same product from a different product location thereby avoiding the out-of-position product.

There may be provided a vending machine further configured to move the pick mechanism to a plurality of x-y coordinate locations and use the distance sensor at each of the plurality of x-y coordinate locations to generate mapping data, wherein the mapping data may be configured to enable the internal structure of the vending machine to be mapped to identify vendible product locations. The internal layout of the vending machine may thereby be reconfigured, to accommodate vendible products of differing sizes, without the need for a human operator to reprogram the vending machine to specify the reconfigured position of vendible product locations since mapping data may be automatically analysed to determine the positon of vendible product locations.

There may be provided a vending machine wherein the mapping of the internal structure of the vending machine may be performed by a mapping processor located either within the vending machine or remote from the vending machine. Thus, the mapping processor may be embodied as software in the machine or may comprise software executed on an external computing device connected to the vending machine.

There may be provided a vending machine wherein the mapping of the internal structure of the vending machine comprises identification of substantially linear features (using linear detection algorithms based on a map image obtained from the sensor data, for example), including substantially horizontal linear shelf features and substantially vertical linear separator features, to identify vendible product locations being situated between respective pairs of linear shelf features and respective pairs of linear separator features. The mapping process may be configured to present candidate product locations to a user for approval or may store the identified locations for subsequent product picking operations.

There may be provided a vending machine wherein the distance sensor comprises a laser.

According to a further aspect of the invention there is provided a vending machine comprising: a delivery unit for presenting vendible products to a user for removal from the vending machine, configured to be located in a user-accessible delivery position; a robotic arm; a pick mechanism coupled to the robotic arm, the pick mechanism configured to retrieve a vendible product in the vending machine and to provide the vendible product to the delivery unit; and a delivery door system, comprising: a delivery door movable between a closed position and an open position, the closed position configured to prevent user access to the delivery unit, the open position configured to enable user access to the delivery unit; a motor configured to move the delivery door; and a sensor system, configured to sense force experienced by the delivery door; wherein the motor and the sensor system are configured to form a closed feedback loop such that the delivery door is configured to halt movement if the sensed force exceeds a predetermined threshold.

The presence of a moveable delivery door may advantageously improve the security of the vending machine by preventing a user from gaining unauthorized access to the interior of the vending machine, while improving the safety of operation of the vending machine by ensuring that the delivery door will not apply more than a predetermined amount of force in the event that an object, such as a vendible product or a user's hand, is place in the way of the delivery door when it is in motion.

There may be provided a vending machine wherein the delivery door, after halting movement, is configured to recommence (such as after a predetermined time) the movement or reverse the direction of movement.

According to a further aspect of the invention there is provided a vending machine comprising: a first user interface disposed in the vending machine, configured to enable a first user to provide instructions for release of one or more vendible products from the vending machine; a second user interface disposed remotely from the vending machine, configured to enable a second user to provide instructions for release of one or more vendible products from the vending machine; and an autonomous control system, configured to receive instructions from the first user interface and/or the second user interface and to control the vending machine to provide for the release of the one or more vendible products from the vending machine based on the received instructions.

Enabling a second user to operate the vending machine from a remote location may improve the efficiency of the vending machine as the second user may not thereby need to travel to the vending machine in order to perform certain operations.

There may be provided a vending machine further comprising an Application Programming Interface configured to receive instructions from the first user interface and/or the second user interface and to provide instructions for the release of the one or more vendible products from the vending machine.

Use of an Application Programming Interface may improve the flexibility of operation and programming of the vending machine.

Examples of the invention will now be described in detail with reference to the accompanying figures, in which:
Figure 1 shows a partially cut-away side view of a vending machine;
Figure 2 shows a delivery unit disposed in a non-user-accessible loading position distal to a delivery aperture of a vending machine;
Figure 3 shows the delivery unit of figure 2 with a bag and a plurality of vendible products disposed within respective portions of the delivery unit;
Figure 4 shows the delivery unit of figure 3 disposed in a user-accessible delivery position proximal to the delivery aperture of the vending machine of figure 2;
Figure 5 shows a cut away view of part of the interior of a vending machine;
Figure 6 shows a cut away view of part of the interior of a vending machine;
Figure 7 shows a cut away view of part of the interior of a vending machine;
Figure 8 shows a block diagram showing the use of an API to receive orders from multiple input devices and instruct the vending machine to retrieve product;
Figure 9 shows a delivery door and closed loop feedback mechanism; and
Figure 10 shows a view of a product locations and product in a vending machine;

A vending machine may offer a range of different vendible products to users. Such machines may beneficially be located in busy public places to provide a convenient retail service to passing individuals. There is a need to improve the efficiency and reliability of vending machines to provide for a fast service to users, to prevent undesirable queues of users forming to use such vending machines, and to ensure that each user is provided with the specific product or products that they have ordered. Furthermore, improvements in vending machines to provide for reliability, more efficient stocktaking, programming, configuration and reconfiguration of the internal structure, of the vending machine, may also be desirable. The present disclosure is directed to addressing these and other associated issues in vending machine technology.

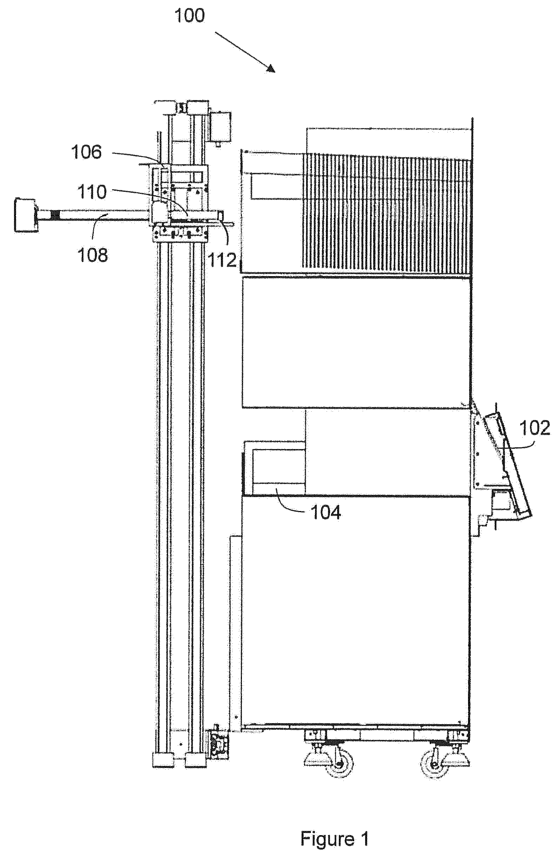

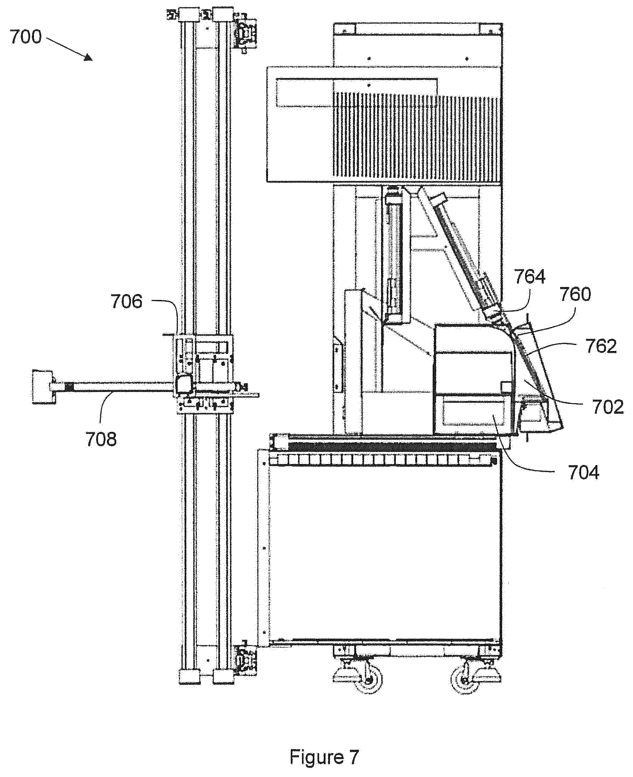

Figure 1 shows a cut-away view of a vending machine 100 according to an embodiment of the present disclosure. The vending machine 100 comprises a delivery aperture 102 configured to enable a user to remove a vendible product from the vending machine. The delivery aperture 102 may be considered to be disposed at the front of the vending machine 100 in a position convenient for use by a user. The vending machine 100 further comprises a delivery unit 104, movable between a non-user-accessible loading position (shown in Figure 1), distal to the delivery aperture 102, and a user-accessible delivery position proximal to the delivery aperture 102 (shown in Figure 7). The vending machine 100 further comprises a robotic arm 106 and a pick mechanism 108 coupled to the robotic arm 106. The robotic arm 106 is configured to move the pick mechanism 108 both vertically and horizontally (in the direction into and out of the paper). In this way, the robotic arm 106 can position the pick mechanism 108 at a range of different x-y coordinates within its plane of movement inside the vending machine 100. The pick mechanism 108 comprises a picker arm 110 configured to move in a z direction, perpendicular to the x-y plane of movement of the robotic arm 106. Positioned at an end of the picker arm 110 is a product picker 112 configured to be releaseably attachable to a vendible product. The product picker 112 may comprise a mechanical grab unit or a vacuum suction unit or any other such mechanism known to persons skilled in the art. By appropriate movement of the pick mechanism 108 and the picker arm 110, the pick mechanism 108 is configured to retrieve a vendible product in the vending machine 100 and to provide the vendible product to the delivery unit 104 while the delivery unit 104 is located in the non-user-accessible loading position. Thus, the none-user-accessible position is located adjacent to the x-y plane in which the robotic arm operates, such as adjacent to its support structure 114. In this example, the none-user-accessible positon is spaced from the delivery aperture at the rear of the machine. This enables the product picker mechanism 108 to place product in the delivery unit without substantial extension of the picker arm 110.

The delivery unit 104 is configured to move the received vendible product from the non-user-accessible loading position to the user-accessible delivery position. The movement of the delivery unit 104 may be achieved by the operation of an electric motor together with suitable drive mechanisms such a belt drives or screw drives or by other mechanisms such as pneumatic or hydraulic systems.

In some examples, the delivery unit 104 may be moveable between a plurality of non-user-accessible loading positions such that the delivery unit 104 may be configured to receive or be loaded with a plurality of vendible products in each of the plurality of non-user-accessible loading positions and to move the received plurality of vendible products to the user-accessible delivery position. In this way, a user may order a plurality of vendible products and the vending machine 100 may advantageously load the plurality of vendible products into the delivery unit 104 before the plurality of vendible products is moved from the loading position to the delivery position. This arrangement may save time compared to operation of a vending machine without a movable delivery unit, where the pick mechanism would have to traverse the additional distance between the back of the vending machine and the front of the vending machine. However, with the movable delivery unit 104 of the present disclosure the pick mechanism 108 may move forwards only as far as the delivery unit 104, deposit the vendible product within the delivery unit 104 and then perform the next pick operation, to retrieve the next vendible product of the plurality of vendible products, without any delay. Thereby, the user who has ordered a plurality of vendible products may be provided with their order more quickly than would otherwise be possible.

In some examples, the vending machine 100 may further comprise a pick mechanism 108 configured to provide a plurality of vendible products to the delivery unit 104 when positioned in at least one of the non-user-accessible loading positions, wherein the pick mechanism 108 is configured to position the plurality of vendible products in one or more of a horizontally spaced configuration and a vertically stacked configuration within the delivery unit 104. This may be particularly advantageous when the vendible products are rectilinear, or are contained in rectilinear packaging. In such cases the vendible products may be efficiently positioned within the delivery area 104 by placing them in a vertical and or horizontal array, like building blocks. A user's entire order of vendible products may then be provided within the delivery unit 104 and conveyed from the loading position to the delivery position in a single movement of the delivery unit 104. A neatly stacked array of vendible products may also provide the advantage that the user may be able to remove all of the vendible products from the vending machine 100 more quickly and efficiently than if the vendible products were presented in a relatively disorganised arrangement.

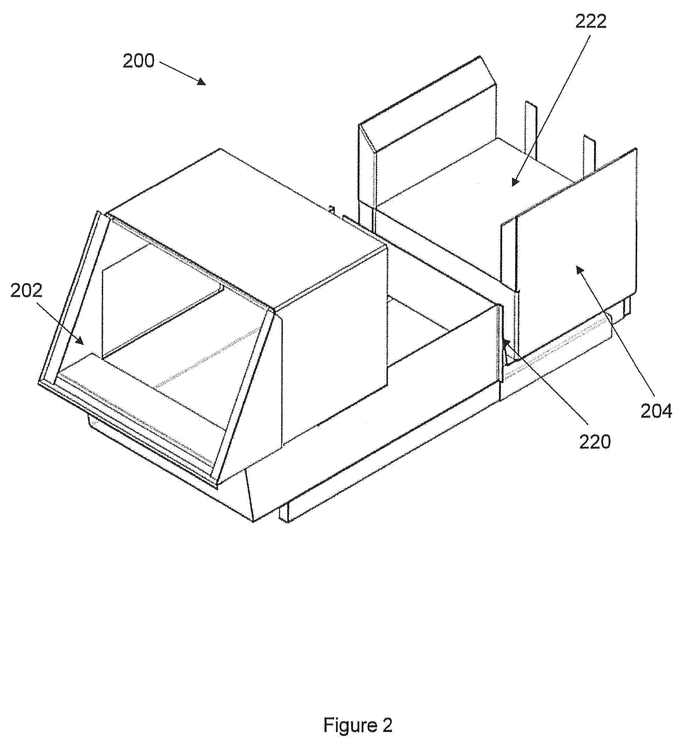

Figure 2 shows an enlarged perspective view 200 of the delivery unit 204 of figure 1. In figure 2 the delivery unit 204 is shown in a non-user-accessible loading position, distal to the delivery aperture 202.

In some examples the delivery unit 204 may comprises a bag receiving portion 220 and the pick mechanism (not shown) may be configured to position a bag within the bag receiving portion 220, such that when the delivery unit 204 is disposed in the user-accessible delivery position a bag positioned within the bag receiving portion may be presented to a user. Providing a bag in this way may expedite the user's vending machine experience by enabling them to load their vendible products into the provided bag. The time saved by presenting the user with a bag, rather than relying on the user to have and/or find their own bag, may both increase the ease of use of the vending machine for an individual user and increase the number of individual users that the vending machine may serve within a particular unit of time. The bag receiving portion may comprise a slot separate from where the vendible products are placed. The bag receiving portion may be located at a front side of the delivery unit 204 with respect to the delivery aperture so that the bag is presented to a user first and can then be loaded with the products located behind the bag on the delivery unit 204.

In some examples the delivery unit may comprise a plurality of vendible product receiving portions, each vendible product receiving portion having a particular vertical level, the picking mechanism may be further configured to provide a vendible product to an appropriate vendible product receiving portion. In this way, the vending machine may provide a plurality of vendible products to the user, arranged in such a way that it is easy for the user to see and/or to reach the vendible products in order to remove them from the delivery unit through the delivery aperture. This may avoid user dissatisfaction which may occur if the user fails to remove a vendible product from the delivery area and thereby concludes that the said vendible product was not provided. This may further avoid the problem of the vending machine encountering an unexpected item in the delivery unit when the vending machine commences providing vendible products to the delivery unit for a subsequent user.

In some examples the delivery unit may be configured to move, within the vending machine between the non-user-accessible loading position and the user-accessible delivery position by a translational motion. In some cases the translation motion may be from the back of the vending machine to the front of the vending machine, in other examples the translation motion may be a vertical motion from a loading position above, or below, the delivery position. In general, the delivery unit 204 may be configured to move from a position adjacent the plane in which the robotic arm operates to a position adjacent the delivery aperture.

In some examples the delivery unit may be configured to move between the non-user-accessible loading positon and the user-accessible delivery positon by a rotational motion (not shown). For example, the delivery unit may be situated on a rotatable carousel, wherein rotation about a vertical axis may convey the delivery unit from the rear of the vending machine to the front of the vending machine proximal to the delivery aperture.

In some examples the delivery unit may be configured to move to the user-accessible-delivery position only after having received the plurality of vendible products. By waiting until after the delivery unit has been fully loaded with the plurality of vendible products, the time required to convey the vendible products to the user-accessible delivery position may be reduced. Of course, in other examples, where a user has ordered more vendible products than can be placed in the delivery unit at the same time, the delivery unit may be configured to move to the user-accessible-delivery position with batches of vendible product, and then return to the loading positon, once the user has remove the first batch of vendible products, to delivery further batches or complete the order.

In some examples there may be provided a vending machine comprising: a delivery aperture configured to enable a user to remove a vendible product from the vending machine; a delivery unit 204 configured to be located in a user-accessible delivery position; a robotic arm; and a pick mechanism coupled to the robotic arm, the pick mechanism configured to retrieve a plurality of vendible products in the vending machine and to provide the plurality of vendible products to the delivery unit 204; wherein the delivery unit may comprise a bag receiving portion 220 configured to receive a bag and a separate product receiving portion 222 configured to receive one or more vendible products. The product receiving portion 222 may comprise a flat area or a tray. Thus, the delivery unit may comprise a moveable caddy with distinct areas for product and a bag.

In some examples (not shown) the bag receiving portion may comprises a guide portion configured to receive and retain the bag in a particular orientation. Retaining the bag in a particular orientation may enable presentation of the bag in a particularly accessible orientation to a user. The guide portion may comprise one or more mechanical grab units configured to hold the bag in a particular orientation. Alternatively, a vacuum suction apparatus, such as a perforated plate, may be used to hold the bag in a particular orientation, or any other mechanism of holding a bag, known to persons skilled in the art, may be used to retain the bag in the particular orientation.

In some examples the bag receiving portion 220 may comprise a bag delivery slot 220 configured to receive a bag and to present the bag to a user in an upright orientation. A simple slot may function adequately as a bag receiving portion 220 when the bag selected for use in conjunction with the bag receiving slot 220 is a sufficiently rigid bag, such that the bag may maintain an upright orientation when the base of the bag is confined within the bag delivery slot 220.

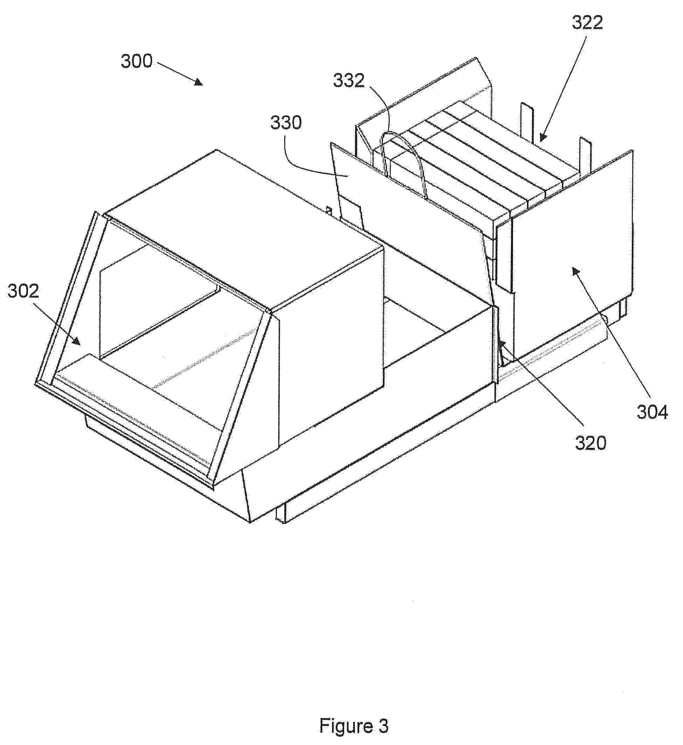

Figure 3 shows an enlarged perspective view 300 of the delivery unit 304 of figures 1 and 2. In figure 3 the delivery unit 304 is shown in a non-user-accessible loading position, distal to the delivery aperture 302.

In some examples the bag delivery slot 320 may be located in front of the product receiving portion 322 with respect to the delivery aperture 302.

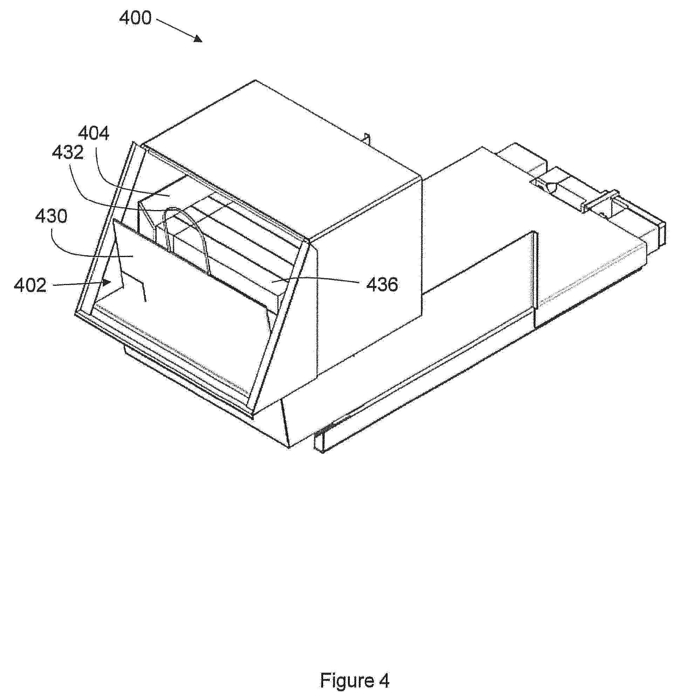

In some examples the pick mechanism (not shown) is configured to provide a bag 330, having handles 332, to the bag delivery slot 320 such that the handles 332 project outwards from the bag delivery slot 320 while at least a portion of the remainder of the bag is retained within the bag delivery slot 320. This arrangement may facilitate use of the bag by a user as disclosed below in relation to figure 4.

Figure 4 shows an enlarged perspective view 400 of the delivery unit 404 of figures 1 to 3. In figure 4 the delivery unit 404 is shown in a user-accessible delivery position, proximal to the delivery aperture 402.

In some examples the delivery unit 404 is configured to be moveable between a non-user-accessible loading position, distal to the delivery aperture 402, and a user-accessible delivery position, proximal to the delivery aperture 402, and the pick mechanism (not shown) is configured to provide the plurality of vendible products to the delivery unit 404 while the delivery unit 404 is located in a non-user-accessible loading position (not shown), before the delivery unit 404 is moved to the user-accessible delivery position (as shown). Once moved to the user-accessible delivery position, a bag 430 retained in the delivery unit 404 or slot may be presented to a user. The presentation of the bag 430 may be particularly convenient if the bag 430 has handles 432 and the bag 430 is oriented such that the handles 432 project outwards from the delivery unit 404 towards and/or through the delivery aperture 402. The bag 430 may easily be removed by the user and then used to stow vendible products 436 located in the delivery unit 404 behind the position in which the bag 430 was retained.

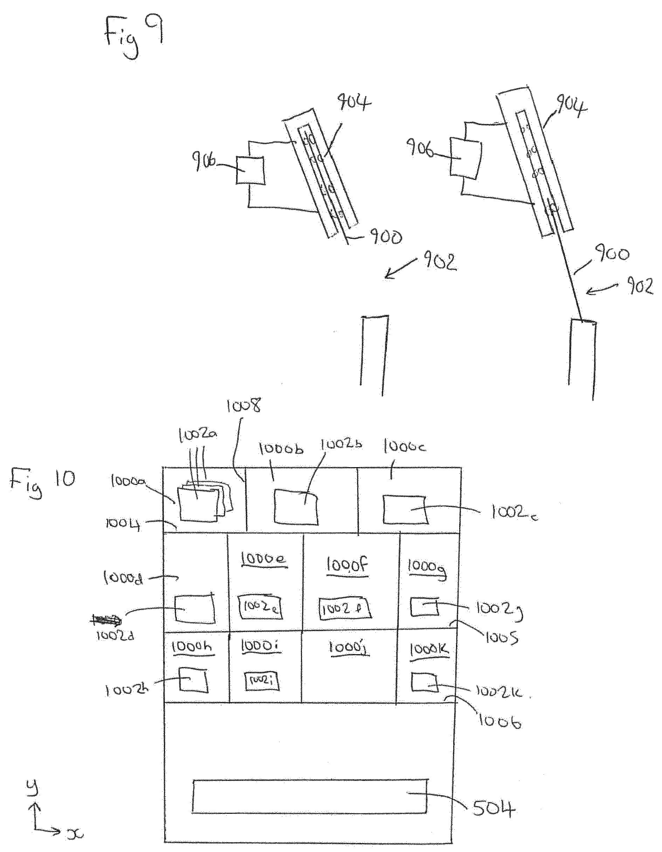

In some examples shown in Figures 9a and 9b, the vending machine may further comprise a delivery door 900 movable between a closed position (Figure 9a) and an open position (Figure 9b), the closed position configured to prevent user access to the delivery unit (not shown) through the delivery aperture 902, the open position configured to enable user access to the delivery unit through the delivery aperture 902, as further disclosed below.

In some examples the vending machine may further comprise a motor 904 configured to move the delivery door 900 and a sensor system 906 configured to sense force experienced by the delivery door 900, wherein the motor 906 and the sensor system may be configured to form a closed feedback loop such that the delivery door may be configured to halt movement if the sensed force exceeds a predetermined threshold. The motor may comprise a wheeled drive motor to slide a laminar delivery door 900, which may be of glass or transparent/translucent material.

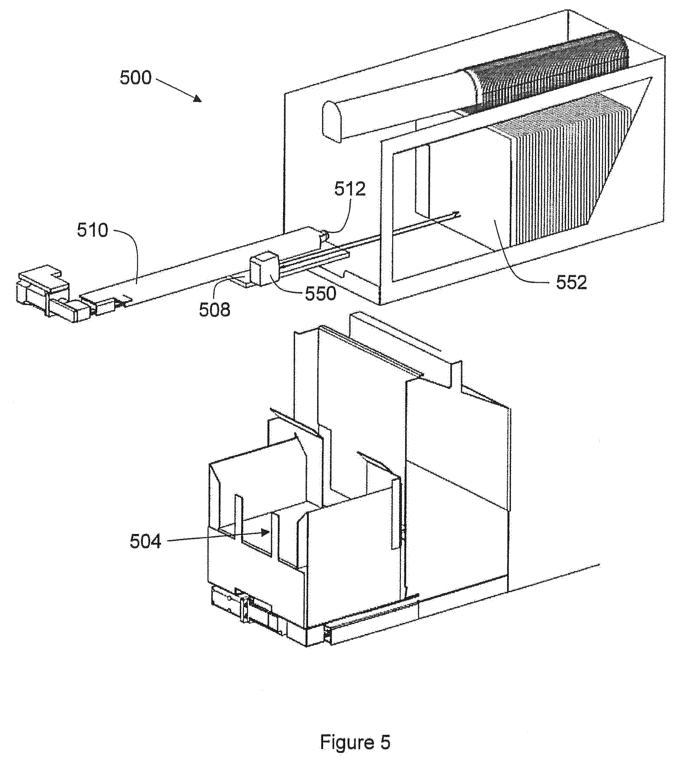

Figure 5 shows a cut-away perspective view of part of the interior of a vending machine 500. Figure 10 shows the interior of the vending machine as viewed from the picker mechanism. The vending machine comprises a plurality of vendible product locations 1000a-k for storing a plurality of vendible products 1002a-k, the plurality of vendible product locations each having a corresponding x-y coordinate; a robotic arm (shown in Figure 1, 106); a pick mechanism 508 coupled to the robotic arm, the robotic arm configured to move the pick mechanism 508 from an initial x-y coordinate (such as an idle or rest position) to an x-y coordinate corresponding to a target vendible product (1002b for example), the pick mechanism 508 configured to retrieve the target vendible product 1002b in the vending machine, the pick mechanism 508 comprising a picker arm 510 extending and moveable in a z direction, the picker arm 510 having a product picker 512 for retrieving the target vendible product; and a laser distance sensor 550, coupled to the robotic arm, configured to measure a distance between the product picker 512 and a vendible product 552 in the vending machine 500. The particular vendible product 1002, 552 shown in figure 5 is a bag, however, it will be appreciated that the vending machine 500 may be configured to measure a distance between the product picker 512 and any vendible product 1002a-k contained within the vending machine 500 whatsoever.

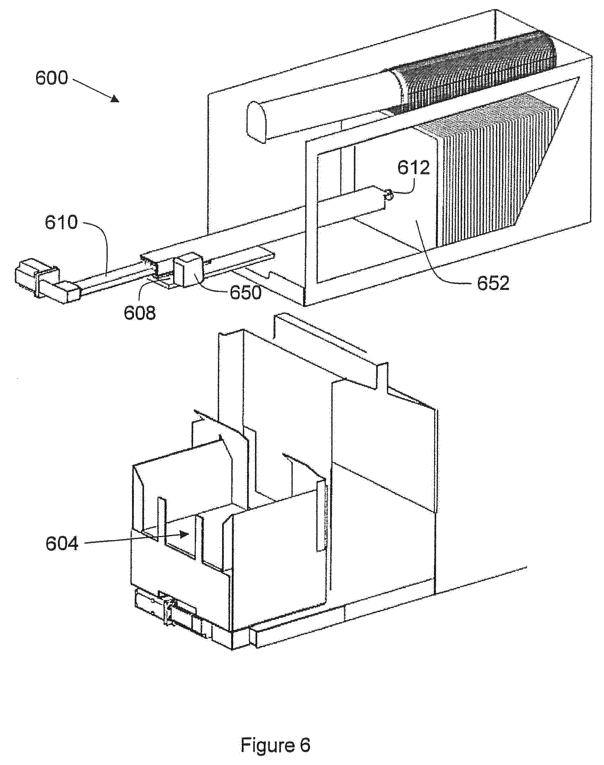

Figure 6 shows a cut-away perspective view of part of the interior of a vending machine 600 similar to that of figure 5. The pick mechanism 608 of the vending machine 600 has been configured to extend the picker arm 610 in the z direction such that the product picker 612 has been brought into register with a target vendible product 652. The greater the time required to bring the product picker 612 into register with the target vendible product 652 the slower, and therefore less efficiently, the vending machine 600 will operate. Therefore, it is desirable to move the product picker 612 towards the target vendible product 652 at as high a velocity as possible. However, unless the positon of the target vendible product 652 is known precisely, the product picker 612 may be brought into contact with the target vendible product 652 at such a high velocity that damage may result to either the target vendible product 652 or the product picker 612. To avoid such damage occurring, while maintaining a high velocity for as long as possible, the vending machine 600 may be further configured to provide for a velocity of the product picker 612 in the z direction based on a distance measured by the distance sensor 650 between the product picker 612 and the target vendible product 652. In this way, the product picker 612 may be advanced towards the target vendible product 652 at as high a velocity as is safe, while allowing for sufficient space for the product picker 612 to decelerate to an appropriate velocity at which to make contact with the target vendible product 652. Once the product picker 612 is attached to the target vendible product 652, the target vendible product 652 may then be moved (not shown) to the delivery unit 604, for onward movement to the user.

In some examples, the vending machine may be further configured to measure at least one distance between the product picker and at least one vendible product 1002a, c, d, e, f, g, h, l, k during a pick operation comprising retrieval of the target vendible product 1002b, wherein the at least one vendible product is located remote from the target vendible product. While the product picker is being moved by the robotic arm towards the target vendible product, the distance sensor 650 may measure the distance between the product picker and other vendible products. Such measurements may allow the vending machine to maintain accurate records of the positions of the other vendible products and thereby to maintain accurate records of the remaining stock of vendible products contained in the vending machine. It may also ensure that the products are stacked in their positions correctly. By using the time during which the product picker is engaged in a pick operation to perform stock taking operations or product orientation/integrity checks, the vending machine may operate more efficiently than would be the case if stock taking/checking was performed exclusively as a separate operation.

In some examples the vending machine may be further configured to perform a dedicated stack take/product check operation comprising moving the pick mechanism from an initial x-y coordinate to the x-y coordinate of at least one vendible product location and to measure a distance using the distance sensor 650 between the pick mechanism and a vendible product located at the at least one vendible product location. In this way the vending machine may perform stock taking operations to establish the amount of stock left within the vending machine, without the need for a person to inspect the interior of the vending machine to perform stock taking operations manually.

In some examples, the vending machine may be further configured to move the pick mechanism to a plurality of x-y coordinate locations and at each of the plurality of x-y coordinate locations to measure a distance between the pick mechanism and the structure of the machine to generate mapping data, wherein the mapping data may be configured to enable the internal structure of the vending machine to be mapped to identify vendible product locations. Such a system may be beneficial if the interior structure of the vending machine is reconfigured, for example, to accommodate a plurality of vendible products of differing sizes to the vendible products previously contained within the vending machine. Such a reconfiguration may involve moving horizontal structures (shelves 1004, 1005, 1006) and vertical structures (separators 1008) to new locations such that the size of vendible product locations may be conformed appropriately to the size of the new vendible products. The mapping data may be configured to enable mapping of the internal structure of the vending machine by measuring distances from the product picker to the internal structures of the vending machine at a sufficiently high resolution. Such automated mapping provides the advantage that a human operator may not need to program the vending machine manually to specify all of the positions of the vendible product locations. Furthermore, since the automated mapping measures the internal structure of the vending machine as it is actually disposed, it may avoid the possibility of human errors introduced in any manual programming procedure.

In some examples the mapping of the internal structure of the vending machine may be performed by a mapping processor located either within the vending machine or remote from the vending machine. If the processor is located within the vending machine this may provide the advantage of enabling mapping even when a network connection is unavailable. If the processor is located remotely from the vending machine this may enable efficient use of the processor to provide the mapping process for a plurality of different vending machines, physically disposed at disparate locations, but connected to the mapping processor over a network.

In some examples, the mapping of the internal structure of the vending machine may comprise identification of substantially linear features, including substantially horizontal linear shelf features and substantially vertical linear separator features, the vendible product locations being situated between respective pairs of linear shelf features and respective pairs of linear separator features. Identification of substantially linear features may accelerate the mapping process by removing the need to measure distances at as high a resolution as would be required without the identification process, since identification of substantially linear features may enable the use of extrapolation or interpolation methods to identify vendible product locations. Thus, measurements for the distance sensor may be used as pixels to form a map image and linear detection algorithms may be used to identify the shelves and the dividers. The product locations may be selected to be at the centre of gaps between the identified shelves and dividers.

In some examples the distance sensor may comprise a laser. In some examples the distance sensor may comprise an ultrasound transmitter and an ultrasound receiver configured to measure distance by detecting reflected ultrasound signals. Other distance sensors, known to persons skilled in the art, may also be employed.

Figures 7, 9a and 9b illustrate a delivery door in combination with a sensor system. Figure 7 shows a side cut-away view of a vending machine 700 similar to that of figure 1. The vending machine 700 comprises a delivery unit 704 configured to be located in a user-accessible delivery position; a robotic arm 706; a pick mechanism 708 coupled to the robotic arm 706, the pick mechanism 708 configured to retrieve a vendible product in the vending machine 700 and to provide the vendible product to the delivery unit 704; and a delivery door system 760, comprising: a delivery door 760 movable between a closed position and an open position, the closed position configured to prevent user access to the delivery unit 704, the open position configured to enable user access to the delivery unit 704; a motor 764 configured to move the delivery door 762; and a sensor system 906 (shown in Figures 9a, 9b), configured to sense force experienced by the delivery door 762; wherein the motor 764 and the sensor system are configured to form a closed feedback loop such that the delivery door 762 is configured to halt movement if the sensed force exceeds a predetermined threshold.

The delivery door 762 may in particular be configure to prevent or enable access to the delivery unit 704 via the delivery aperture 702 situated in the front of the vending machine 700 proximal to the user-accessible delivery position of the delivery unit 704. The motor 764 configured to open and close the delivery door 762 may be an electrical motor or may be any other form of mechanical actuator, such as a pneumatic or hydraulic system.

The predetermined threshold force may be chosen to ensure that if an object such as a vendible product or a user's hand obstructs the motion of the delivery door, the object will not be damaged by the applied force.

In some examples, the delivery door 762, 900, after halting movement, may be configured to recommence the movement or reverse the direction of movement. The movement may only halt momentarily before resuming or reversing. If the movement of the delivery door is configured to reverse then once the delivery door has reversed to a certain extent, the delivery door may be configured to re-attempt the original movement.

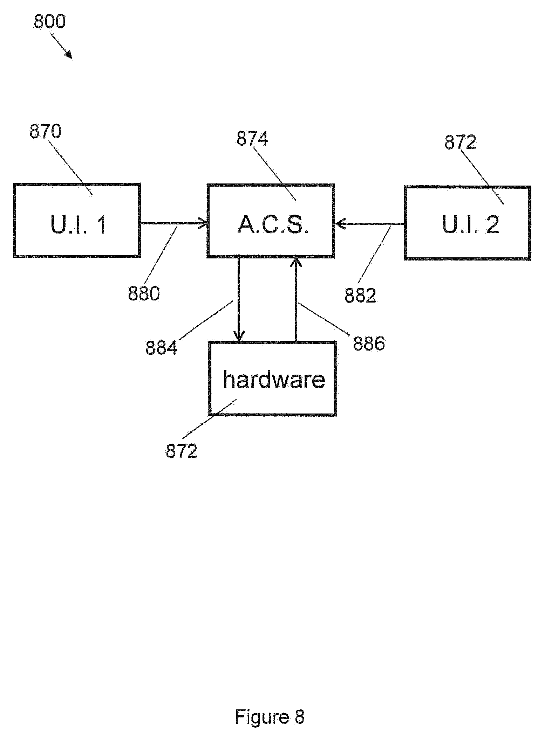

Figure 8 shows a block diagram illustrating the relationships between a first user interface 870, a second user interface 872, an autonomous control system 874 and vending machine hardware 876 according to an embodiment of the present disclosure. A vending machine 800 may comprise: a first user interface 870 disposed in the vending machine 800, configured to enable a first user to provide instructions 880 for release of one or more vendible products from the vending machine 800; a second user interface 872 disposed remotely from the vending machine 800, configured to enable a second user to provide instructions 882 for release of one or more vendible products from the vending machine; and an autonomous control system 874, configured to receive instructions 880, 882 from the first user interface 870 and/or the second user interface 872 and to control the vending machine hardware 876 to provide for the release of the one or more vendible products from the vending machine 800 based on the received instructions 880, 882.

The autonomous control system 874 may provide control signals 884, representative of the received instructions 880, 882 to the vending machine hardware 876. The autonomous control system 874 may also receive feedback signalling 886 from the vending machine hardware 876. The feedback signalling 886 may include data relating to the distances between a product picker and a vendible product, or other part of the internal structure of the vending machine, as disclosed above. The received instructions 880, 882 together with the feedback signalling 886 may provide the autonomous control system with the information needed to provide the control signals 884 needed to provide for the release of the vendible product or products, ordered by a user, from the vending machine 800.

In some examples a vending machine may further comprise an Application Programming Interface configured to receive instructions from the first user interface and/or the second user interface and to provide instructions for the release of the one or more vendible products from the vending machine. Use of an Application Programming Interface may enable greater flexibility and efficiency as regards the operation and programming of a vending machine according to embodiments of the present disclosure.

## Claims

1. A vending machine comprising:
a delivery aperture configured to enable a user to remove a vendible product from the vending machine;
a delivery unit for presenting vendible product to a user for removal from the vending machine;
a pick mechanism configured to retrieve a plurality of vendible products in the vending machine and to provide the plurality of vendible products to the delivery unit;
wherein the delivery unit comprises a bag receiving portion configured to receive a bag and a separate product receiving portion configured to receive one or more vendible products.

2. The vending machine of claim 1, wherein the bag receiving portion comprises a guide portion configured to receive and retain the bag in a particular orientation.

3. The vending machine of claim 1, wherein the bag receiving portion comprises a bag delivery slot configured to receive a bag and to present the bag to a user in an upright orientation.

4. The vending machine of claim 3, wherein the bag delivery slot is located in front of the product receiving portion with respect to the delivery aperture.

5. The vending machine of claim 3, wherein the pick mechanism is configured to provide a bag, having handles, to the bag delivery slot such that the handles project outwards from the bag delivery slot while at least a portion of the remainder of the bag is retained within the bag delivery slot.

6. The vending machine of claims 1 to 5, wherein the delivery unit is configured to be moveable between a non-user-accessible loading position, distal to the delivery aperture, and a user-accessible delivery position, proximal to the delivery aperture, and the pick mechanism is configured to provide the plurality of vendible products to the delivery unit while the delivery unit is located in a non-user-accessible loading position, before the delivery unit is moved to the user-accessible delivery position.

7. The vending machine of claims 1 to 6, further comprising a delivery door movable between a closed position and an open position, the closed position configured to prevent user access to the delivery unit through the delivery aperture, the open position configured to enable user access to the delivery unit through the delivery aperture.

8. The vending machine of claim 7, further comprising a motor configured to move the delivery door and sensor system configured to sense force experienced by the delivery door, wherein the motor and the sensor system are configured to form a closed feedback loop such that the delivery door is configured to halt movement if the sensed force exceeds a predetermined threshold.

9. A vending machine comprising:
a delivery aperture configured to enable a user to remove a vendible product from the vending machine;
a delivery unit, movable between a non-user-accessible loading position, distal to the delivery aperture, and a user-accessible delivery position proximal to the delivery aperture;
a robotic arm; and
a pick mechanism coupled to the robotic arm, the pick mechanism configured to retrieve the vendible product in the vending machine and to provide the vendible product to the delivery unit while the delivery unit is located in the non-user-accessible loading position;
wherein, the delivery unit is configured to move the received vendible product from the non-user-accessible loading position to the user-accessible delivery position.

10. The vending machine of claim 9, further comprising the pick mechanism configured to provide a plurality of vendible products to the delivery unit when positioned in the non-user-accessible loading position, wherein the pick mechanism may be configured to position the plurality of vendible products in one or more of a horizontally spaced configuration and a vertically stacked configuration within the delivery unit.

11. The vending machine of claim 9, wherein the delivery unit is moveable between a plurality of non-user-accessible loading positions such that the delivery unit is configured to receive one or more vendible products in each of the plurality of non-user-accessible loading positions and to move the received plurality of vendible products to the user-accessible delivery position.

12. The vending machine of any preceding claim, wherein the delivery unit comprises a bag receiving portion and the pick mechanism is configured to position a bag within the bag receiving portion, such that when the delivery unit is disposed in the user-accessible delivery position a bag positioned within the bag receiving portion is presented to a user.

13. A vending machine comprising:
a plurality of vendible product locations for storing a plurality of vendible products, the plurality of vendible product locations each having a corresponding x-y coordinate;
a robotic arm;
a pick mechanism coupled to the robotic arm, the robotic arm configured to move the pick mechanism from an initial x-y coordinate to an x-y coordinate corresponding to a target vendible product, the pick mechanism configured to retrieve the target vendible product in the vending machine, the pick mechanism comprising a picker arm extending and moveable in a z direction, the picker arm having a product picker for retrieving the target vendible product; and
a distance sensor, coupled to the robotic arm, configured to measure a distance between the product picker and a vendible product in the vending machine.

14. The vending machine of claim 13, further configured to provide for a velocity of the product picker in the z direction based on a distance measured by the distance sensor between the product picker and the target vendible product.

15. The vending machine of claim 14, further configured to move the pick mechanism to a plurality of x-y coordinate locations and use the distance sensor to generate mapping data, wherein the mapping data is configured to enable the internal structure of the vending machine to be mapped to identify vendible product locations.
